# EUROPÄISCHE PATENTSCHRIFT

(11) **EP 2 543 878 B1**
(45) Veröffentlichungstag und Bekanntmachung des Hinweises auf die Patenterteilung: **01.08.2018**
(21) Anmeldenummer: 12004472.2
(22) Anmeldetag: 13.06.2012
(51) Int. Cl.: F03D 80/00, F03D 80/50

(54) **Vorrichtung und Verfahren zum Drehen einer Rotorwelle einer Windenergieanlage**
Method and device for rotating a rotor shaft of a wind energy turbine
Dispositif et procédé de rotation d'un arbre de rotor d'une éolienne

(30) Priorität: 02.07.2011 DE 102011106428
(43) Veröffentlichungstag der Anmeldung: 09.01.2013
(73) Patentinhaber: Nordex Energy GmbH, 22419 Hamburg (DE)
(72) Erfinder: Nitzpon, Joachim, 18209 Steffenshagen (DE); Grüß, Arno, 235336 Klein Nordende (DE)
(74) Vertreter: Hauck Patentanwaltspartnerschaft mbB

(56) Entgegenhaltungen:
- EP-B1- 1 659 286
- DE-A1- 2 747 891
- DE-A1-102008 038 128
- DE-B- 1 276 655
- DE-C1- 10 031 473

## Beschreibung

Die vorliegende Erfindung betrifft eine Vorrichtung und ein Verfahren zum Drehen einer Rotorwelle einer Windenergieanlage.

Bei Windenergieanlagen ist es erforderlich, für Arbeiten am Triebstrang der Windenergieanlage die Rotorwelle zu arretieren. Hierzu ist es notwendig, vor Beginn der Arbeiten am Triebstrang den Rotor der Windenergieanlage in eine definierte Position zu verstellen, damit der Triebstrang arretiert werden kann. Bei einem blockierten Getriebe kann der Rotor der Windenergieanlage nicht in die zur Arretierung vorgesehenen Positionen gebracht werden. Eine Arretierung des Rotors in einer beliebigen anderen Position ist in der Regel nicht möglich, so dass Arbeiten am Triebstrang aufgrund des blockierten Getriebes unzulässig werden. Es ist bekannt, einen Getriebetausch am Boden vorzunehmen. Hierzu wird der Rotor von der Windenergieanlage entfernt, der Triebstrang in der Gondel demontiert und mit Hilfe eines Krans auf den Boden herabgelassen. Wenn der Triebstrang am Boden ist, kann das Getriebe getauscht werden. Anschließend wird der Triebstrang wieder in die Anlage eingesetzt. Alternativ ist es möglich eine Rotorhaltevorrichtung einzusetzen, um ein defektes Getriebe auf der Anlage zu tauschen ohne den Rotor zu demontieren. Hierzu wird der Rotor in der Y- oder in der umgekehrten Y- Position arretiert. Die Rotorhaltevorrichtung nimmt die Kräfte der Rotorwelle auf und leitet sie in einen Maschinenträger der Windenergieanlage ein. Die Rotorhaltevorrichtung übernimmt für die Zeitdauer des Getriebetausches temporär die Lagerfunktion des zu entfernenden Getriebes.

Aus DE 10 2008 038 128 A1 ist eine Verstelleinrichtung zum Verstellen der Drehwinkelposition des Rotors einer Windenergieanlage bekannt. Hierzu wird ein Kraftübertragungsrad auf die Rotorwelle montiert und beispielsweise über eine Kette oder einen Zahnriemen mit einem Antriebsrad zum Drehen der Rotorwelle verbunden.

Aus EP 1 659 286 B1 ist eine Törn-Vorrichtung zum Drehen des Antriebsstrangs einer Windenergieanlage bekannt. Die Törn-Vorrichtung besitzt eine am Maschinenrahmen festsetzbare Konsole, die mit einem Linearstellglied winkelbeweglich verbunden ist. Über eine auf der Rotorwelle vorgesehene Adapterscheibe kann mit Hilfe des Linearstellglieds eine Törnbewegung der Rotorwelle bewirkt werden.

Aus DE 100 31 473 C1 ist eine Vorrichtung zum Drehen einer mit einem Rotor verbundenen oder gekoppelten Welle einer Windenergieanlage bekannt. Zum Drehen der Antriebswelle wird ein Ritzel auf der Antriebswelle befestigt und mit Hilfe eines ortsfest angebrachten Werkzeugs gedreht.

Aus der Auslegeschrift DE 1 276 655 ist eine Turbinenwellen-Drehvorrichtung mit Stirnreibräder-Getriebe bekannt. Die Drehvorrichtung besitzt zwei verschwenkbare Arme, die eine zu drehende Turbinenwelle umfassen und an ihrem freien Ende über einen federvorgespannten Hydraulikzylinder gegeneinander verspannt werden können. Drei Treibräder sind an den Schwenkarmen befestigt.

Der Erfindung liegt die Aufgabe zugrunde, eine einfach zu montierende Vorrichtung und ein Verfahren zum Drehen einer Rotorwelle einer Windenergieanlage bereitzustellen, durch die bzw. das eine Rotorwelle zuverlässig in eine gewünschte Position gedreht werden kann.

Erfindungsgemäß wird die Aufgabe durch eine Vorrichtung mit den Merkmalen aus Anspruch 1 gelöst. Vorteilhafte Ausgestaltungen bilden die Gegenstände der Unteransprüche.

Die erfindungsgemäße Vorrichtung ist vorgesehen und bestimmt, um eine Rotorwelle einer Windenergieanlage zu drehen. Die Vorrichtung weist einen Träger, eine Verstelleinrichtung und mindestens zwei antreibbare Reibrollen auf. Der Träger ist mit Befestigungsmitteln zur ortsfesten Anbringung in einer die Rotorwelle überspannenden Position ausgestattet. In der die Rotorwelle überspannenden Position kann der Träger sowohl oberhalb als auch unterhalb der Rotorwelle angeordnet sein. Die Verstelleinrichtung ist an dem Träger gehalten und stellt den Abstand zwischen den mindestens zwei antreibbaren Reibrollen ein. Erfindungsgemäß sind die mindestens zwei Reibrollen in der montierten Position des Trägers über die Verstelleinrichtung an die Rotorwelle anpressbar und im gleichen Drehsinn antreibbar, um die Rotorwelle zu drehen. In dieser Position der Verstelleinrichtung wird der Abstand zwischen den mindestens zwei Reibrollen durch die Verstelleinrichtung vermindert. Die zwischen den Reibrollen angeordnete Rotorwelle begrenzt die Bewegung der Reibrollen, so dass die Reibrollen über eine von der Verstelleinrichtung aufgebrachte Kraft an der Rotorwelle anliegen. Durch die gleichsinnige Drehbewegung der Reibrollen wird die Rotorwelle in Bewegung gesetzt. Die erfindungsgemäße Vorrichtung kann auch bei einem blockierten Getriebe in einer die Rotorwelle überspannenden Position montiert werden. Nach dem Lösen der Verbindung zwischen Rotorwelle und Getriebe kann die Rotorwelle in eine vorbestimmte Position dreht werden, um diese zu arretieren, wobei die Rotorwelle weiterhin durch das Getriebe abgestützt wird.

In einer bevorzugten Ausgestaltung weist jede der Reibrollen einen elektrischen Antrieb auf, über den die Reibrolle gedreht wird. Alternativ kann auch ein hydraulischer oder andersartiger Antrieb verwendet werden.

Die Verstelleinrichtung ist erfindungsgemäß als ein hydraulischer Hubzylinder ausgebildet. Ein hydraulischer Hubzylinder erlaubt es, eine ausreichende Anpresskraft für die Reibrollen aufzubringen, um die Rotorwelle zu drehen. In einer bevorzugten Ausgestaltung sind eine erste Reibrolle mit einem ersten Ende der Verstelleinrichtung und eine zweite Reibrolle mit einem zweiten Ende der Verstelleinrichtung verbunden und wirken mit dieser zusammen. In dieser Ausgestaltung wird die Längenänderung der Verstelleinrichtung in eine Abstandsänderung zwischen den Reibrollen umgesetzt. Erfindungsgemäß wird hierbei die erste und zweite Reibrolle jeweils über einen schwenkbar mit dem Träger verbundenen Hebel mit der Verstelleinrichtung verbunden. Über den Hebel wird eine Verlängerung der Verstelleinrichtung in eine Bewegung der Reibrollen aufeinander zu umgesetzt, wodurch sich der Abstand zwischen den Reibrollen verringert. Durch eine Verkürzung der Verstelleinrichtung wird der Abstand zwischen den Reibrollen vergrößert.

Um die Kraft von den Reibrollen auf die Rotorwelle zu übertragen, ist bevorzugt jede der Reibrollen mit einem den Reibwert vergrößernden Belag oder mit einer entsprechenden Oberflächenstruktur versehen.

In einer bevorzugten Ausgestaltung besitzen die Reibrollen entsprechend der Ausbildung der Rotorwelle eine zylindrische oder konische Gestalt, bevorzugt mit einer leicht balligen Oberfläche, wodurch die Reibrollen in ihrem montierten Zustand flächig mit ihrer Mantelfläche an der Rotorwelle anliegen können. Die flächige Anlage stellt sicher, dass eine große Kraft zwischen den Reibrollen und der Rotorwelle übertragen werden kann.

In einer weiteren Ausgestaltung ist die Anpresskraft der Reibrollen an der Rotorwelle so gewählt, dass die Rotorwelle bei kurzzeitigen Überlasten durch Windböen zwischen den Reibrollen rutschen kann. Dadurch wird ein Überlastschutz gewährleistet. Das Durchrutschen der Rotorwelle zwischen den Reibrollen wird durch die Auswahl eines geeigneten Materials für den Belag oder die Oberfläche der Reibrollen erzielt.

Mit der erfindungsgemäßen Vorrichtung kann eine Rotorwelle einer Windenergieanlage in eine gewünschte Position gedreht werden. Es treten die folgenden Schritte auf:
- Montieren eines Trägers mit einer Verstelleinrichtung und mindestens zweier Reibrollen auf einem Maschinenträger einer Windenergieanlage in einer die Rotorwelle überspannenden Position,
- Anpressen der Reibrollen an die Rotorwelle durch ein Betätigen der Verstelleinrichtung, und
- Antreiben der Reibrollen im gleichen Drehsinn zur Erzeugung einer Drehbewegung der Rotorwelle.

Ein Träger mit einer Verstelleinrichtung und mindestens zwei Reibrollen wird auf einem Maschinenträger einer Windenergieanlage montiert. Der Maschinenträger ist dabei das Teil der Windenergieanlage, das den Triebstrang trägt und auf welchem die Rotorwelle und das Getriebe gelagert sind. Der Träger überspannt hierbei die Rotorwelle. Die mit der Verstelleinrichtung verbundenen Reibrollen werden auf beiden Seiten der Rotorwelle positioniert und durch ein Betätigen der Verstelleinrichtung an die Rotorwelle angepresst. Die Reibrollen werden im gleichen Drehsinn angetrieben, wodurch die Rotorwelle in eine Drehbewegung versetzt wird.

In einer besonderen Ausgestaltung wird das Verfahren zum Drehen einer Rotorwelle einer Windenergieanlage verwendet, welche mit einem blockierten Getriebe verbunden ist. Hierbei wird nach dem Anpressen der Reibrollen die Verbindung der Rotorwelle mit dem Getriebe gelöst. Bei einer Lagerung der Rotorwelle in dem Getriebe kann die Rotorwelle auch bei gelöster Verbindung weiterhin im Getriebe abgestützt sein. Die Rotorwelle wird dann relativ zu einer Getriebeeingangswelle drehbar abgestützt. Die gleichsinnig angetriebenen Reibrollen drehen die Rotorwelle in eine Position, in der der Rotor arretiert werden kann. Zur Demontage des Getriebes wird eine bekannte Rotorhaltevorrichtung verwendet.

Eine bevorzugte Ausgestaltung der Erfindung wird nachfolgend näher erläutert. Es zeigt:
- Fig. 1: einen schematischen Querschnitt durch die Rotorwelle und
- Fig. 2: eine schematische Draufsicht auf die Rotorwelle.

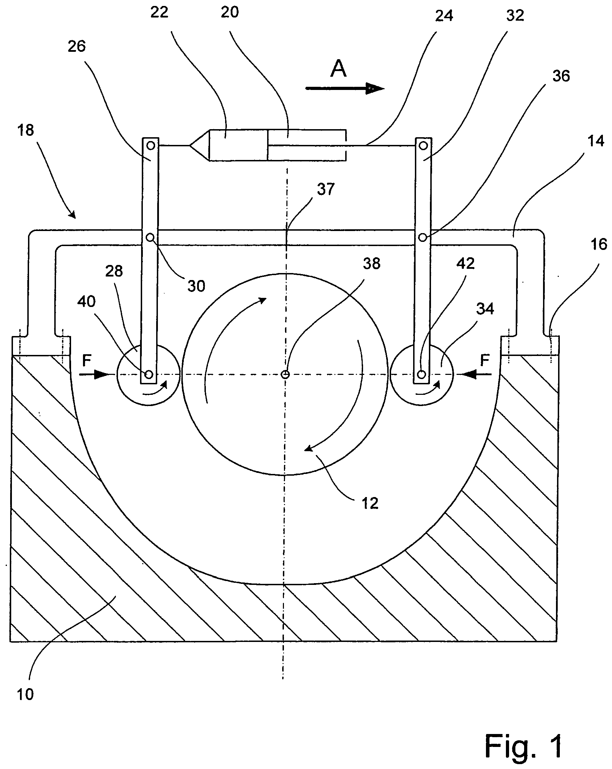

Fig. 1 zeigt einen Querschnitt durch einen Maschinenträger 10. Der Maschinenträger 10 ist an einer Gondel der Windenergieanlage angeordnet und trägt eine Rotorwelle 12, mit der eine Drehbewegung des Rotors an ein Getriebe oder einen Generator weitergeleitet wird. Der Maschinenträger 10 ist in der Regel als ein massives Gussteil oder eine entsprechend stabile Rahmenkonstruktion ausgebildet. Die Rotorwelle 12 ist in der Regel rotorseitig durch ein Lager (nicht dargestellt) auf den Maschinenträger 10 gestützt und mündet in einem Getriebe oder einem Generator (nicht dargestellt).

Um die Rotorwelle bei einem Getriebeschaden mit blockiertem Getriebe drehen zu können, muss die Rotorwelle von dem Getriebe entkoppelt werden. Dies kann beispielsweise durch das Öffnen eines Spannsatzes am Getriebe geschehen.

Um die Drehbewegung der Rotorwelle bei einem entkoppelten Getriebe kontrollieren zu können, wird ein Träger 14 mit seinen Enden 16 auf den Maschinenträger 10 montiert. Der Träger 14 weist eine die Rotorwelle überspannende Traverse 18 auf, die sich über die Rotorwelle erstreckt. Die Enden des Trägers 14 können beispielsweise mit Flanschen versehen sein, über die der Träger lösbar mit dem Maschinenträger 10 verschraubt ist. An der Traverse 18 des Trägers 14 ist eine Verstelleinrichtung 20 in Form eines Hubzylinders angeordnet. Der Hubzylinder 20 besitzt ein Zylindergehäuse 22 und eine Kolbenstange 24. Die Längsrichtung der Kolbenstange 24 erstreckt sich im Wesentlichen parallel zu der Traverse 18 des Trägers 14. Das Zylindergehäuse 22 ist über eine Hebelstange 26 mit einer Reibrolle 28 verbunden. Die Hebelstange 26 ist mit der Traverse 18 in einem Gelenk 30 schwenkbar gelagert. Entsprechend ist mit der Kolbenstange 24 ein Hebel 32 verbunden, der mit der Reibrolle 28 in Verbindung steht. Der Hebel 32 ist an einem Gelenk 36 schwenkbar an der Traverse 18 angebracht.

Durch ein Ausfahren der Kolbenstange 24 in Richtung A verschwenken die erste Hebelstange 26 und die zweite Hebelstange 32 um ihre Gelenke 30 und 36, so dass sich die Rollen 28 und 34 aufeinander zu bewegen.

Wenn der Träger 14 oberhalb der Rotorwelle montiert ist, entsteht durch die Verlängerung des Hubzylinders 18 eine Anpresskraft F der Reibrollen 28 und 34 gegen die Rotorwelle 12.

Die Gelenke 30 und 36 besitzen den gleichen Abstand d von einem gedachten Mittelpunkt 37, der oberhalb des Mittelpunktes 38 der Rotorwelle 12 liegt. Auf diese Weise wird sichergestellt, dass die aus der Längenänderung des Hubzylinders erzeugte Anpresskraft F für beide Reibrollen 28, 34 gleich groß ist und so ein Schlupf zwischen der Rotorwelle 12 und den Reibrollen 28, 34 vermieden wird.

Wie in Fig. 1 zu erkennen, sind die Reibrollen 28 und 34 auf einer Höhe relativ zu der Rotorwelle angeordnet. In der dargestellten Anordnung liegen die Mittelpunkte 40 und 42 der Reibrollen 28 bzw. 34 auf einer Geraden mit dem Mittelpunkt 38 der Rotorwelle 12. Neben der dargestellten Anordnung, in der die Mittelpunkte 38, 40 und 42 auf einer Geraden liegen, ist es auch möglich, die Reibrollen 28 und 34 in einer anderen Winkelposition gegenüber der Rotorwelle 12 anzuordnen, so dass beispielsweise die Verbindung der Mittelpunkte 40, 38, 42 ein V bildet.

Die Reibrollen 28 und 34 besitzen jeweils einen eigenen elektrischen Antrieb, um die Reibrollen zu drehen. Die Drehung der Reibrollen erfolgt gleichsinnig, so dass insgesamt eine Drehbewegung der Rotorwelle 12 entsteht.

Bezogen auf die Verwendung der Erfindung bei einem Getriebeschaden, werden vor einem Lösen der Verbindung zwischen Rotorwelle 12 und Getriebe die Reibrollen 28, 34 über den Träger angesetzt und durch ein Betätigen des Hubzylinders gegen die Rotorwelle gepresst. Bei stehenden Antrieben der Reibrollen kann nun die Verbindung zum Getriebe gelöst werden. Ein unkontrolliertes Drehen der Rotorwelle wird durch die Reibrollen verhindert. Sollte es dennoch aufgrund einer Windböe oder aufgrund anderer Umstände zu einem angreifenden Drehmoment an der Rotorwelle 12 kommen, kann dieses bis zu einer bestimmten Stärke durch die angepressten Reibrollen aufgefangen werden. Ist das angreifende Drehmoment zu stark, beginnt die Rotorwelle sich gleitend gegen die Anpresskraft der Reibrollen und deren Haltemoment zu drehen. Auf diese Weise ist ein Überlastschutz sichergestellt.

Durch Betätigung der Reibrollen 28, 34 in gleichsinniger Drehrichtung kann die Rotorwelle 12 kontrolliert in eine gewünschte Arretierposition gedreht werden. In der Regel handelt es sich hierbei um eine Y- oder eine umgekehrte Y-Position der Rotorblätter.

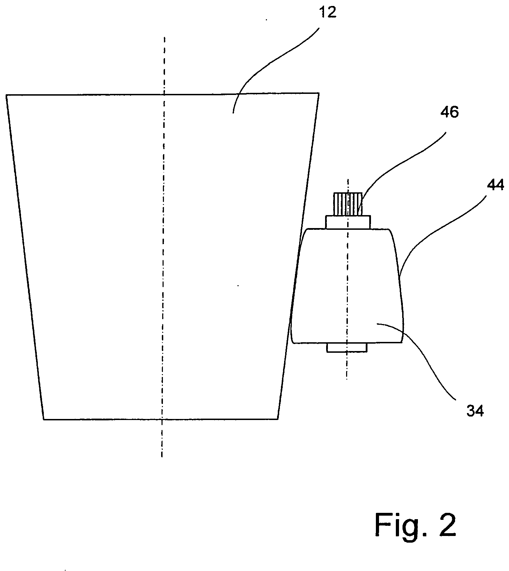

Fig. 2 zeigt in einer Ansicht von oben einen Ausschnitt der Rotorwelle 12. Die Rotorwelle 12 besitzt hierbei einen konischen Verlauf. An der Rotorwelle 12 liegt die Reibrolle 34 an, die eine konische und leicht ballige Mantelfläche 44 besitzt. Die Reibrolle 34 ist aus einem Elastomermaterial hergestellt oder damit beschichtet, das eine hohe Haftreibung mit der Rotorwelle 12 besitzt. Angetrieben wir die Reibrolle 34 von einem Elektromotor 46, der an dem Hebel 32 (nicht dargestellt) gehalten ist.

Die Antriebe der Reibrollen 28, 34 können gemeinsam zentral zu einer gleichsinnigen Drehbewegung angesteuert werden, so dass die Rotorwelle 12 kontrolliert in eine zur Arretierung der Rotorwelle geeignete Position gedreht werden kann.

## Patentansprüche

1. Vorrichtung zum Drehen einer Rotorwelle einer Windenergieanlage mit
- einem Träger (14), der eine die Rotorwelle überspannende Traverse (18) und Befestigungsmittel (16) zur ortsfesten Anbringung in einer die Rotorwelle (12) überspannenden Position aufweist,
- einer Verstelleinrichtung (20), die an dem Träger (14) gehalten ist, und
- mindestens zwei antreibbaren Reibrollen (28, 34), deren Abstand zueinander über die Verstelleinrichtung (20) einstellbar ist,
- wobei in der montierten Position des Trägers (14) mindestens zwei Reibrollen über die Verstelleinrichtung (20) an die Rotorwelle (12) anpressbar und gleichsinnig antreibbar sind, um die Rotorwelle (12) zu drehen, **dadurch gekennzeichnet, dass** die Verstelleinrichtung (20) als ein hydraulischer Hubzylinder ausgebildet ist, wobei ein Zylindergehäuse (22) über eine erste Hebelstange (26) mit einer ersten Reibrolle und eine Kolbenstange (24) über eine zweite Hebelstange (32) mit einer zweiten Reibrolle in Verbindung steht, wobei erste und zweite Hebelstange jeweils über ein Gelenk schwenkbar mit der Traverse verbunden sind und eine gleich große Anpresskraft für beide Reibrollen erzeugen.

2. Vorrichtung nach Anspruch 1, **dadurch gekennzeichnet, dass** jede Reibrolle über einen elektrischen oder einen hydraulischen Antrieb (46) verfügt.

3. Vorrichtung nach Anspruch 1 oder 2, **dadurch gekennzeichnet, dass** jede der Reibrollen (28, 34) einen den Reibwert erhöhenden Belag besitzt.

4. Vorrichtung nach einem der Ansprüche 1 bis 3, **dadurch gekennzeichnet, dass** die Reibrollen (28, 34) eine zylindrische oder konische Gestalt aufweisen.

5. Vorrichtung nach Anspruch 4, **dadurch gekennzeichnet, dass** die Reibrollen in ihrer montierten Position flächig mit ihrer Mantelfläche (44) an der Rotorwelle (12) anliegen.

6. Vorrichtung nach einem der Ansprüche 1 bis 5, **dadurch gekennzeichnet, dass** die Rotorwelle bei Überlasten zwischen den Reibrollen rutscht.

## Claims

1. A device for rotating a rotor shaft of a wind turbine with
• a carrier (14), which comprises a crossbeam (18) spanning over the rotor shaft, and fastening means (16) for attaching it stationary in a position spanning over the rotor shaft (12),
• an adjustment device (20), which is held on the carrier (14), and
• at least two drivable frictional rollers (28, 34), whose distance from each other is adjustable via the adjustment device (20),
• wherein in the mounted position of the carrier (14) at least two frictional rollers are pressable against the rotor shaft (12) and are drivable in the same direction via the adjustment device (20) in order to rotate the rotor shaft (12), **characterised in that** the adjustment device (20) is realised as an hydraulic lifting cylinder, a cylinder casing (22) being connected to a first frictional roller via a first lever rod (26), and a piston rod (24) being connected to a second frictional roller via a second lever rod (32), wherein the first and the second lever rod are each one pivotally connected to the crossbeam via a joint and generate an equal pressing force for both frictional rollers.

2. The device according to claim 1, **characterised in that** each frictional roller has an electric or a hydraulic drive (46).

3. A device according to claim 1 or 2, **characterised in that** each one of the frictional rollers (28, 34) has a coating which increases the coefficient of friction.

4. A device according to one of the claims 1 to 3, **characterised in that** the frictional rollers (28, 34) have a cylindrical or a conical shape.

5. The device according to claim 4, **characterised in that** in their mounted position, the frictional rollers lie flat with their outer surface (44) against the rotor shaft (12).

6. A device according to one of the claims 1 to 5, **characterised in that** the rotor shaft slips between the frictional rollers when there are overloads.

## Revendications

1. Dispositif pour tourner un arbre de rotor d'une éolienne, avec
• un porteur (14), qui comporte une traverse (18) recouvrant l'arbre de rotor, et des éléments de fixation (16) pour fixation stationnaire dans une position qui recouvre l'arbre de rotor (12),
• un dispositif de réglage (20), qui est maintenu sur le porteur (14), et
• au moins deux rouleaux de friction (28, 34) pour être entraînés, dont la distance de l'un par rapport à l'autre peut être réglée via un dispositif de réglage (20),
• dans la position montée du porteur (14) au moins deux rouleau de frictions pouvant être pressés contre l'arbre de rotor (12) et entraînés au même sens via le dispositif de réglage (20) afin de tourner l'arbre de rotor (12), **caractérisé en ce que** le dispositif de réglage (20) est réalisé comme un cylindre de levage hydraulique, un boîtier de cylindre (22) étant relié à un premier rouleau de friction via une première tige de levier (26), et une tige de piston (24) à un deuxième rouleau de friction via une deuxième tige de levier (32), la première et la deuxième tige de levier chacune étant reliées à la traverse de manière pivotante à travers une articulation et générant une force de serrage égale pour tous les deux rouleaux de friction.

2. Dispositif selon la revendication 1, **caractérisé en ce que** chaque rouleau de friction a un entraînement électrique ou un entraînement hydraulique (46).

3. Dispositif selon la revendication 1 ou 2, **caractérisé en ce que** chacun des rouleaux de friction (28, 34) a un revêtement qui augmente le coefficient de friction.

4. Dispositif selon une des revendications 1 à 3, **caractérisé en ce que** les rouleaux de friction (28, 34) ont une forme cylindrique ou conique.

5. Dispositif selon la revendication 4, **caractérisé en ce que** dans leur position montée, les rouleaux de friction s'appliquent à plat contre l'arbre de rotor (12) avec leurs surfaces enveloppantes (44).

6. Dispositif selon une des revendications 1 à 5, **caractérisé en ce que** l'arbre de rotor glisse entre les rouleaux de friction en cas de surcharges.
